# EUROPEAN PATENT APPLICATION

(11) **EP 1 793 245 A2**
(43) Date of publication of application: **06.06.2007**
(21) Application number: 06256017.2
(22) Date of filing: 24.11.2006
(51) Int. Cl.: G02B 3/00, G02B 7/02, H01L 33/00

(54) **Led lens cover**

(30) Priority: 25.11.2005 US 739994 P
(71) Applicant: Richco Inc., Morton Grove IL 60053 (US)
(72) Inventor: Courtney Tony; c/o Richco International Co, Ltd, Gravesend DA11 8HE (GB)
(74) Representative: Thomson, Neil David

(57) **Abstract**

A lens cover for an LED semiconductor diode that emits light when a voltage is applied to it through electrical connections. The lens cover is substantially waterproof and capable of protecting the LED semiconductor diode from environmental hazards and comprises an elongated body covering the connections, a lens at one end of the body for transferring light from the LED semiconductor diode, and means adapted to removably secure and seal the LED semiconductor diode within the lens cover to a surface upon which the lens cover and LED semiconductor diode is mounted.

## Description

### Background and Summary of the Invention

1. Semiconductor diodes which convert applied voltage to light, usually called LED devices, are being used in digital displays, as in a calculator, but such devices are infrequently used in outdoor locations, such as in exposed traffic signs or the like, not only because of insulation and environmental problems but also because the display must be viewable from many angles remote from the display, including shallow angles closer to the horizon. This invention deals with a lens cover for LED devices which not only shields the device, but also permits it to be viewable from many angles, including angles close to the horizon.
2. Such an LED Lens Cover device must be waterproof and capable of protecting the LED from the environment, easy to install, and provide means for efficiently elevating the display from the LED devices above the surface of the structure into which they are installed, for example, if the LED device is to be mounted in a traffic sign, the lens must be maintained at a shallow angle relative to the horizon so that the sign can be seen from most relevant positions.
3. It is also desirable to provide an LED lens cover which is able to accommodate small variations in the size and shape of the LED device, and which when installed is held and displayed in a selected position without chance movement, including movement caused by variations in outdoor conditions, such as rain, snow, sleet, hail, wind and wide variations in temperatures, or when installed in an outdoor movable structure.
4. According to the present invention, there is provided a lens cover for an LED semiconductor diode that emits light when a voltage is applied to it through electrical connections, said lens cover being substantially waterproof and capable of protecting said LED semiconductor diode from environmental hazards, said lens cover comprising an elongated body covering said connections, a lens at one end of said body for transferring light from said LED semiconductor diode, and means adapted to removably secure and seal said LED semiconductor diode within said lens cover to a surface upon which said lens cover and LED semiconductor diode is mounted.
5. Preferably, said lens cover may be molded from plastic material in one piece.
6. Said surface may be apertured and said body has means for engaging said apertured surface on which said lens cover is mounted. Preferably, said engaging means comprises a tab adapted to be connected on to said surface. Most preferably, said tab is u-shaped; said tab is flexible and adapted to snap engage said surface; said tab is adapted to receive said LED semiconductor diode engaged into said lens cover; and/or said tab has a barb for engaging said surface.
7. Preferably, an o-ring encircles said body for enclosing said lens cover in said surface.
8. Said body may be cylindrical, and a head at said lens end of said body may be of a greater diameter than said body remote from said lens end.
9. Preferably, said lens may be spaced inwardly from the periphery of said body and said lens may be concavo-convex.
10. Said body may have one or more slit at its periphery remote from said lens.
11. Preferably, said lens may be disposed angularly to said surface.
12. A lens cover embodying the present invention has an elongated cylindrical body protecting the LED leads, and this body has a plurality of flexible tabs formed in its wall adapted to snap engage into a sign or similar panel into which the lens cover is mounted. These flexible tabs may be arranged on opposed sides of the cylindrical wall and are free to snap engage into the panel. The head of the lens cover has a circumference greater than the cylindrical body, so that the cover extends over the cylindrical body and is sealed into the panel. The central area of the head is preferably clear and may be thickened toward its center to provide an optical lens effect, as desired. Preferably an o-ring type seal is provided between the enlarged lens head and the exposed surface of the panel to seal the lens cover and LED into the panel.
13. The LED device must be fixed in the lens cover, and the lens cover embodying the present invention has snap engagable means for receiving the LED device into the cylindrical body, even where there are small variations in the diameter of the LED device. The length of the cylindrical body which receives the LED can be varied to accommodate different sizes of LED devices and different effects in the display.
14. Preferably the lens cover embodying the present invention is molded from polycarbonate material which permits formation of the clear lens head and the cylindrical body with its flexible tabs for locking the lens cover into the panel, as well as the structure for receiving the LED device secured into the lens cover. The variations described in the lens cover permit selected differing effects in the lens cover to be co-molded in a single molding step.

### Objects and Advantages of the Invention

15. It is the object of the present invention to provide an LED lens cover of the character described.
16. Another object is to provide an LED lens cover which provides means for viewing a the display of a LED device in a exterior or like environment at angles shallow to the horizon.
17. Another object is to provide a waterproof LED lens cover which protects an operable LED device in an outdoor environment.
18. Another object of the invention is to provide an LED lens cover which protects the LED device leads from environmental and other damage.
19. Another object is to provide an LED lens cover which is adapted to securely and affirmatively receive an LED device in a predetermined position irrespective of small tolerances in the LED device.
20. Another object is to provide an LED lens cover which is adaptable for secured snap engagement in an selected operable position in a panel.
21. Another object is to provide an LED lens cover which can be optically arranged to a desired correction for viewing the display of a LED device.
22. Another object is to provide an LED lens cover which is simple and easy to manufacture and efficient in use.
23. These and other object and advantages will become more apparent as this description proceeds, taken in conjunction with the accompanying drawings.

### Brief Description of the Drawings

24. Embodiments of the invention will now be disclosed, by way of example only, with reference to the accompanying drawings in which:
25. Figure 1 is a perspective view of a panel into which has been installed an LED lens cover embodying the invention and also showing the installation of the lens cover into the panel and the LED device into the lens cover;
26. Figure 2 is an elevational view showing similar to Figure 1;
27. Figure 3 is an elevational side view showing the lens cover embodying the invention;
28. Figure 4 is an sectional side view of the lens cover shown in Figure 3;
29. Figure 5 is a sectional view of panel and elevational view of the lens cover taken at a right angle to the view shown in Figure 3, showing the lens cover mounted in the panel; and
30. Figure 6 is a sectional view of a modified lens cover, illustrating an angularly disposed lens arrangement.

### Description of a Preferred Embodiment

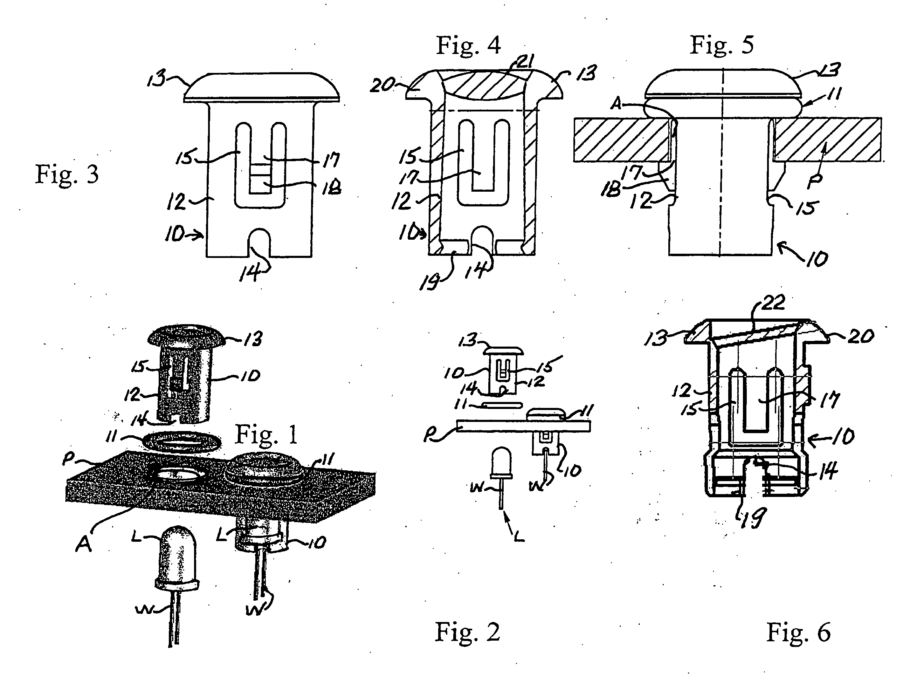

31. With reference particularly to Figures 1 and 2, one lens cover 10 embodying the present invention is shown in the right hand illustration in each view installed over a LED device L in a panel P. In the left hand illustration on each view in Figures 1 and 2, and exploded view of the lens cover 10 is shown above the panel P and its o-ring 11, with the LED device L about to be installed in an aperture A formed in the panel P. The LED device L has a pair of leads W extending from it, which are connected to a source of power (not shown).
32. The lens cover 10 embodying the present invention comprises a cylindrical body 12 and a head 13. Arranged on one end of the cylindrical body 12 remote from the head 13 are one or more slits 14, which provide limited flexibility to the cylindrical body 12. Midway the length of the cylindrical body 12 are a pair of U-shaped apertures 15, preferably arranged on opposed sides of the body, each of which defines a flexible tab 17. The edge 18 of each tab has a barb, which with the head 13 and O-ring 11, is adapted to flexibly removably secure the lens in the panel P. The bottom 19 of the body 12 has a thickened wall, which in association with the slits 14, are adapted to flex and receive the LED device L snap-engaged into the lens cover 10.
33. The head 13 on the end of the lens cover 10 has a greater diameter than the diameter of the cylindrical body
34. This head 13 is adapted to fit over the insulating O-ring 11 which encircles the cylindrical body 12 to enclose the lens cover and LED device into the panel P. This head 13 comprises a ring 20 of material at its periphery and a lens 21 spaced inwardly from its periphery. As shown in Figure 4, this lens 21 is concavo-convex, to spread and project light shining through it in a direction away from the panel P, so that the light emitting from the LED device L can be seen spread from the lens 21. If desired, as shown in Figure 6, this lens 22 may be inclined disposed angularly to the surface of the lens cover and panel P, so that the light emitting from the lens 22 is directed as desired.
35. While the lens cover for a LED device embodying the present invention has been shown and described in considerable detail, many changes and modifications in the structure can be made without departing from the scope or spirit of the invention, and it is not desired that the invention should be limited to the exact structure shown and described.

## Claims

1. A lens cover for an LED semiconductor diode that emits light when a voltage is applied to it through electrical connections, said lens cover being substantially waterproof and capable of protecting said LED semiconductor diode from environmental hazards, said lens cover comprising an elongated body covering said connections, a lens at one end of said body for transferring light from said LED semiconductor diode, and means adapted to removably secure and seal said LED semiconductor diode within said lens cover to a surface upon which said lens cover and LED semiconductor diode is mounted.

2. The lens cover claimed in Claim 1, wherein said lens cover is molded from plastic material in one piece.

3. The lens cover claimed in Claim 1 or Claim 2, wherein said surface is apertured and said body has means for engaging said apertured surface on which said lens cover is mounted.

4. The lens cover claimed in Claim 3, wherein said engaging means comprises a tab adapted to be connected on to said surface.

5. The lens cover claimed in Claim 4, wherein said tab is u-shaped.

6. The lens cover claimed in Claim 4, wherein said tab is flexible and adapted to snap engage said surface.

7. The lens cover claimed in Claim 4, wherein said tab is adapted to receive said LED semiconductor diode engaged into said lens cover.

8. The lens cover claimed in Claim 4, wherein said tab has a barb for engaging said surface.

9. The lens cover claimed in any preceding claim wherein an o-ring encircles said body for enclosing said lens cover in said surface.

10. The lens cover claimed in any preceding claim, wherein said body is cylindrical.

11. The lens cover claimed in any preceding claim, wherein a head at said lens end of said body is of a greater diameter than said body remote from said lens end.

12. The lens cover claimed in any preceding claim, wherein said lens is spaced inwardly from the periphery of said body.

13. The lens cover claimed in any preceding claim, wherein said lens is concavo-convex.

14. The lens cover claimed in any preceding claim, wherein said body has one or more slit at its periphery remote from said lens.

15. The lens cover claimed in any preceding claim, wherein said lens is disposed angularly to said surface.
